# EUROPÄISCHE PATENTANMELDUNG

(11) **EP 1 445 515 A2**
(43) Veröffentlichungstag der Anmeldung: **11.08.2004**
(21) Anmeldenummer: 04002104.0
(22) Anmeldetag: 31.01.2004
(51) Int. Cl.: F16H 61/02, F16H 59/18

(54) **Verfahren zur Steuerung des Schaltablaufs eines Automatgetriebes für ein Kraftfahrzeug**

(30) Priorität: 08.02.2003 DE 10305156
(71) Anmelder: ZF FRIEDRICHSHAFEN Aktiengesellschaft, 88038 Friedrichshafen (DE)
(72) Erfinder: Döbele, Bernd, 88682 Salem (DE)

(57) **Zusammenfassung**

Die Erfindung betrifft ein Verfahren zur Steuerung des Schaltablaufs eines Automatgetriebes, bei dem der Wunsch des Fahrers zur Veränderung der Getriebeübersetzung durch manuelle Betätigung eines Getriebewählhebels an einer Getriebebetätigungsvorrichtung einem Getriebesteuergerät signalisierbar ist. Das Getriebesteuerungsgerät steuert hilfskraftbetätigte Stellvorrichtungen, die auf getriebeseitige Stellglieder der Gangschaltvorrichtung einwirken.

Zur Verbesserung des Getriebe- und Fahrzeugverhaltens bei einer Übersetzungsänderung sollen auch schnell wechselnde Verkehrssituationen besser als bisher berücksichtigt werden. Dazu ist vorgesehen, dass nach einer manuellen Gangvorwahl etwa durch Bewegen des Getriebewählhebels die konkrete Änderung der Getriebeübersetzung erst durch eine später erfolgende kurzzeitige Reduzierung des Fahrpedalauslenkwinkels (F) in Entlastungsrichtung ausgelöst wird.

## Beschreibung

Die Erfindung betrifft ein Verfahren zur Steuerung des Schaltablaufs eines Automatgetriebes für ein Kraftfahrzeug gemäß dem Oberbegriff des Patentanspruchs 1.

Es ist allgemein bekannt, dass in Kraftfahrzeugen zunehmend Automatgetriebe genutzt werden, zu denen neben automatisierten Schaltgetrieben und Stufenwechselgetrieben auf Planetengetriebebasis auch stufenlos das Übersetzungsverhältnis ändernde Umschlingungsgetriebe (CVT-Getrieben) und Toroidgetriebe gehören. Bei derartigen Getrieben hat der Fahrer die Möglichkeit, mittels eines Getriebewählhebels einer Getriebebetätigungsvorrichtung Fahrstufen P, R, N, D für die Rückwärts- und Vorwärtsfahrt sowie für die Park- und Neutralstellung des Getriebes zu wählen.

Zusätzlich besteht bei modernen Fahrzeugen oft die Möglichkeit, mittels des Getriebewählhebels die Wählgasse der Getriebebetätigungsvorrichtung für die genannten Fahrstufen zu verlassen, um in einer zweiten Wählgasse bei einer sportlicheren Fahrweise als dies der reine Automatikfahrbetrieb in der D-Fahrstufe erlauben würde, einzelne Getriebegänge direkt oder sequenziell anzuwählen. Dabei erfolgt die Anwahl des nächst höheren oder nächst niedrigeren Getriebeganges vorzugsweise durch Verschwenken des Wählhebels von einer Neutral- oder D-Position in eine "+"-Stellung oder in eine "-"-Stellung.

Diese Betätigung des Getriebewählhebels wird über geeignete Sensoren erfasst und einem Getriebesteuerungsgerät zugeleitet, das dann die gewünschte Getriebeübersetzung mit Hilfe von geeigneten Steuerungs- und Regelungsprogrammen sowie hilfskraftbetätigten Stellvorrichtungen selbsttätig einstellt.

Gelegentlich treten jedoch Fahrsituationen auf, in denen der Fahrer eines solchermaßen ausgestatteten Fahrzeuges beispielsweise zur Durchführung eines Überhohlvorganges einen manuellen Rückschaltvorgang durchführen möchte. In diesem Fall wird der Getriebewählhebel aus der Automatikwählgasse heraus genommen und in die Schaltgasse eingelegt. Die anschließende Betätigung des Wählhebels in die "-"-Position veranlasst dann das Getriebegetriebesteuergerät die Rückschaltung automatisch durchzuführen.

Sofern sich nach dem Anwählen des niedrigeren Ganges und vor der Vollwendung des Rückschaltvorganges im Getriebe herausstellt, dass der Überhohlvorgang wegen einer sich plötzlich geänderten Verkehrssituation nun doch nicht durchgeführt werden soll, so wird der Rückschaltvorgang wegen der automatischen Schaltdurchführung durch das Getriebesteuerungsgerät dennoch zu Ende gebracht. In einem solchen Fall muss der Fahrer dann mit hoher Motordrehzahl in einem niedrigeren Gang weiterfahren oder manuell beziehungsweise automatisch in einen höheren Getriebegang zurückschalten. Das ein solches Steuerungsverhalten von Fahrzeugführern als nachteilig empfunden wird, ist leicht nachzuvollziehen. Vergleichbar nachteilige Verkehrssituationen können auch zu ähnlich nachteiligen Hochschaltvorgängen führen.

Vor diesem Hintergrund besteht die Aufgabe der Erfindung darin, dass auch schnell wechselnde Verkehrssituationen besser als bisher bei automatisch ablaufenden Getriebeschaltvorgängen berücksichtigbar sind.

Die Lösung dieser Aufgabe wird durch ein Verfahren mit den Merkmalen des Hauptanspruchs erreicht, während vorteilhafte Ausgestaltungen und Weiterbildungen der Erfindung den nachgeordneten Unteransprüchen entnehmbar sind.

Die Erfindung macht sich demnach die Erkenntnis zunutze, dass der visuelle Informationsvorsprung des Fahrers gegenüber dem sensorischen Informationsstand eines Getriebesteuerungsgerätes hinsichtlich des Ablaufs einer Verkehrssituation zwischen der manuellen Anwahl eines neuen Getriebeganges und dem tatsächlichen Ende einer solchen Übersetzungsänderung bedeutend sein kann. Dieser Informationsvorsprung macht sich besonders in der Phase der Lastreduzierung beim Schaltvorgang bemerkbar, die entscheidend für die Schnelligkeit und den Komfort von Übersetzungsänderungen im Getriebe ist.

Die Erfindung betrifft daher ein Verfahren zur Steuerung des Schaltablaufs eines Automatgetriebes, bei dem der Übersetzungsänderungswunsch durch den Fahrer durch eine manuelle Betätigung der Gangwählvorrichtung an ein Getriebesteuergerät signalisierbar ist. Die konkrete Übersetzungsänderung erfolgt dann anschließend mit Hilfe von an den getriebeseitigen Stellgliedern angreifenden hilfskraftbetätigbaren Stellvorrichtungen, die mit dem Getriebesteuergerät unter Nutzung von dort abgespeicherten Steuerungsund Regelungsprogramme angesteuert werden. Zur Verbesserung von solchen Übersetzungsänderungsvorgängen ist vorgesehen, dass der Wechsel der Getriebeübersetzung durch eine kurzzeitige Reduzierung der Fahrpedalauslenkung ausgelöst wird.

Auf diese Weise wird die manuelle Ganganwahl durch Betätigen des Gangwählhebels in die "+"- oder in die "-"-Position bzw. die direkte Anwahl eines konkreten Ganges von dem Getriebesteuerungsgerät nur als Gangvorwahl verstanden, bei der die Bestätigung der Absicht zur Änderung des Übersetzungsverhältnisses tatsächlich noch aussteht. Diese Bestätigung des Übersetzungsänderungswunsches gibt der Fahrer des Fahrzeuges dadurch ab, indem dieser das Fahrpedal für einen vergleichsweise kurzen Augenblick und um einen vergleichsweise geringen Betrag mit vorzugsweise einer vorbestimmten Mindestbetätigungsgeschwindigkeit in seine Entlastungs- beziehungsweise Nullgasstellung zurücknimmt. Da eine solche Fahrpedalbewegung für die Durchführung von Gangschaltvorgängen bei konventionellen Handschaltgetrieben dem Fahrer bekannt ist, läuft dieser Vorgang zur Auslösung der Übersetzungsänderung für den Fahrer intuitiv und ohne Gewöhnungsphase ab.

In einer bevorzugten Ausführungsform des erfindungsgemäßen Verfahrens ist vorgesehen, dass bei einer Reduzierung des Fahrpedalauslenkwinkels um einen ersten vorgegebenen Mindestwert f₁ die Stellvorrichtungen im Getriebe zur Vorbereitung der Übersetzungsänderung in eine Schaltbereitschaftsstellung gebracht werden.

Darüber hinaus wird es als vorteilhaft angesehen, wenn bei einer Reduzierung des Fahrpedalauslenkwinkels um einen zweiten vorgegebenen Mindestwert f₂ die Leistungsabgabe des Fahrzeugantriebsmotors, also in der Regel einer Brennkraftmaschine, von dem Getriebesteuergerät zur Durchführung der Übersetzungsänderung zumindest indirekt vorgegeben und automatisch gesteuert wird. Dabei wird in dieser Phase des Schaltvorgangs der durch die tatsächliche Fahrpedalauslenkung signalisierte Leistungswunsch des Fahrers ignoriert. Zur Durchführung des Verfahrens ist vorgesehen, dass der Fahrpedalstellwinkel mittels eines geeigneten Sensors erfasst und dem Getriebesteuergerät mitgeteilt wird.

Hinsichtlich der beiden Werte f₁ und f₂ der Fahrpedalstellwinkelreduzierung wird es als vorteilhaft angesehen, wenn die erste, die Bereitschaftsstellung der Stellvorrichtungen auslösende Stellwinkelreduzierung f₁ größer oder gleich 10°, und die zweite, die konkrete Änderung des Übersetzungsverhältnisses bewirkende Stellwinkelreduzierung f₂ größer oder gleich 20° ist.

In einer weiteren Variante der Erfindung erfolgt die manuelle Vorwahl bei einer hohen Fahrzeugbeschleunigung und in einem niedrigen Gang, während der tatsächliche Gangschaltvorgang im Getriebe durch eine Reduzierung der Fahrpedalauslenkung erst bei Erreichen einer von dem Fahrer bestimmbaren Motordrehzahl, einer Motordrehzahl- / Motorgeräuschzuordnung oder bei Erreichen einer von dem Fahrer bestimmbaren Fahrgeschwindigkeit durchgeführt wird.

Zudem kann vorgesehen sein, dass mit Beginn der Betätigung des Getriebewählhebels oder ab der sicher ausgeführter Überführung der Stellvorrichtungen des Getriebes in ihre Schaltbereitschaftsstellung ein vorgegebener Zeitraum beginnt. Die Änderung der getriebeseitigen Übersetzungsänderung wird in einem solchen Fall nur dann durchgeführt, wenn die geforderte Reduzierung der Fahrpedalauslenkung in diesen Zeitraum fällt. Dieser Zeitraum beträgt beispielsweise 60 Sekunden, wenngleich 30 Sekunden als vorteilhaft angesehen werden und ein Zeitraum von 15 Sekunden bevorzugt wird. Sofern in diesen Zeitraum die geforderte Fahrpedalrücknahme um den Wert f₂ nicht erfolgt, wird die Gangvorwahl durch den Getriebewählhebel ignoriert und die hilfskraftbetätigbaren Stellvorrichtungen in ihre Ruhestellung zurückgeführt.

Damit ein Übersetzungsänderungsvorgang nicht ungewollt durch ein nervös hin- und herbewegtes Fahrpedal aufgelöst wird, ist in einer weiteren Ausgestaltung der Erfindung vorgesehen, dass eine solche nur dann durchgeführt wird, wenn neben der genannten Betätigung des Getriebewählhebels und dem Erreichen oder Überschreiten des zweiten Fahrpedalrücknahmewertes f₂ zusätzlich eine Fahrpedalbetätigungsgeschwindigkeit gemessen wird, die einen vorbestimmten Wert überschreitet.

Schließlich wird es als vorteilhaft angesehen, wenn der Vorgang der Übersetzungsänderung zugkraftunterbrechungsfrei abläuft.

Zum besseren Verständnis der Erfindung ist der Beschreibung eine Zeichnung beigelegt, in der der zeitliche Verlauf der Motordrehzahl N sowie des Fahrpedalauslenkwinkels F und die tatsächliche Leistungsanforderung F' des Getriebesteuergerätes zur konkreten Schaltdurchführung eines Getriebehochschaltvorgangs eingezeichnet ist. Es versteht sich dabei von selbst, dass zur Darstellung des Leistungswunsches des Fahrers anstelle des Fahrpedalauslenkwinkels F in dieser Zeichnung auch die Kraftstoffeinspritzmenge oder der Drosselklappenöffnungswinkel dargestellt sein könnte, ohne dass dies einen Einfluss auf den Kern der Erfindung und der Aussagekraft der Darstellung hätte.

Darüber hinaus zeigt diese Zeichnung in ihrem unteren Teil den Schaltzustand des Getriebes hinsichtlich der Getriebeübersetzungsstufen von der Neutralstellung GN bis zu den Vorwärtsgängen für den zweiten Gang G2, den vierten Gang G4, den sechsten Gang G6, den achten Gang G8 sowie den zehnten Gang G10. Die Rückwärtsgangstufe sowie die Gangstufen mit ungeraden Zahlen sind hier zur übersichtlicheren Darstellung weggelassen worden.

Bei dem hier betrachteten Hochschaltvorgang ist vor dem Zeitpunkt t₁ zunächst der vierte Gang G4 eingelegt, so dass das Ist-Übersetzungsverhältnis dem Soll-Übersetzungsverhältnis entspricht. Sobald zum Zeitpunkt t₁ der Fahrer des Fahrzeuges den Getriebewählhebel in eine Position lenkt, die den Hochschaltwunsch in den sechsten Gang G6 signalisiert, fallen das Ist-Übersetzungsverhältnis und das Soll-Übersetzungsverhältnis auseinander. Diese Gangvorwahlphase V bleibt bis zum Zeitpunkt t₄ bestehen und wird dann von der konkreten und durch das Getriebesteuerungsgerät autonom gesteuerten Hochschaltphase E abgelöst.

In der Gangvorwahlphase V steigt in einer Zeitspanne t₁ - t₂ die Drehzahl N des Fahrzeugmotors bei konstantem Fahrpedalauslenkwinkel F weiter an. Dieser Fahrpedalauslenkwinkel F soll in dem hier betrachteten Beispiel einen Wert von A = 100% aufweisen und damit einer Vollgasstellung entsprechen.

Im Zeitpunkt t₂, also lange nach dem Abgeben des beschriebenen Gangwechselwunsches, löst der Fahrer zu Beginn einer Phase D im Zeitpunkt t₃ durch eine Verringerung des Fahrpedalauslenkwinkels F von einem Wert A bis auf einen Wert B um einen Winkel f₁ eine erste Reaktion des Getriebesteuerungsgeräts aus, bei der die hilfskraftbetätigbaren Schaltvorrichtungen in eine Schaltbereitschaftsstellung gebracht werden.

Sofern der Fahrpedalauslenkwinkel F zum Zeitpunkt t₄ um den Wert f₂ auf einen Wert C reduziert ist, erfolgt ab diesem Zeitpunkt t₄ ein Übergang von einer durch das Fahrpedal signalisierten Leistungsanforderung (F) zu einer durch das Getriebesteuerungsgerät für den jeweiligen Schaltvorgang vorgesehenen Leistungsanforderung F' an den Antriebsmotor bzw. an ein Motorsteuergerät.

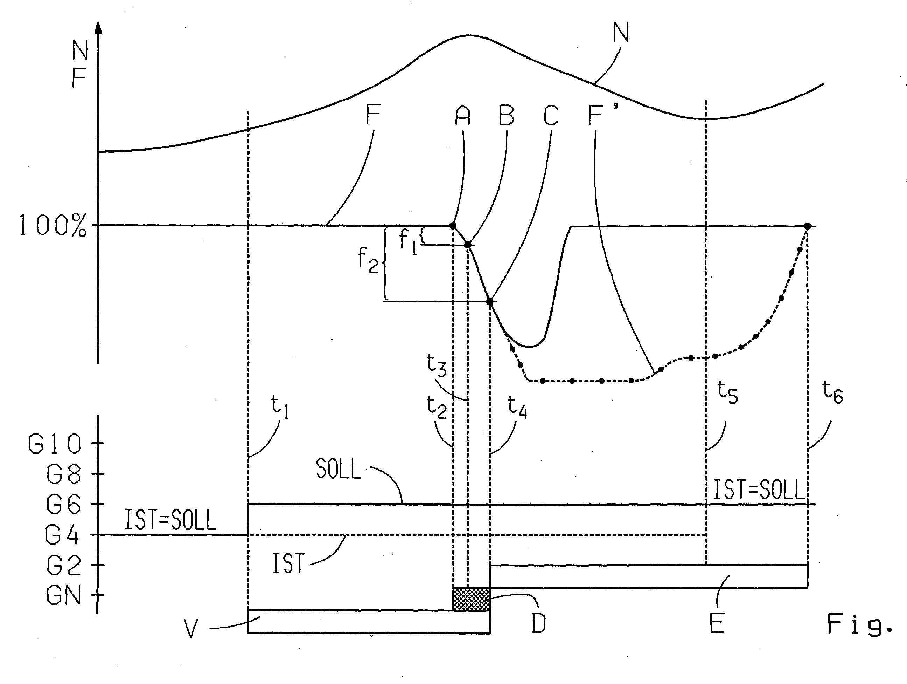

Wie der Zeichnung deutlich entnehmbar ist, weicht in dieser Phase E daher der tatsächliche Verlauf des Fahrpedalauslenkwinkels F und der durch das Getriebesteuerungsgerät für den Schaltvorgang vorgegebene scheinbare Fahrpedalauslenkwinkel F' deutlich voneinander ab. Während der Fahrer in diesem Ausführungsbeispiel das Fahrpedal im Zeitraum t₄ - t₆ in die Vollgasstellung zurückführt, bleibt die mit der Fahrpedalauslenkung F' korrespondierende Leistungsanforderung durch das Getriebesteuerungsgerät an den Motor auf einem vergleichsweise niedrigeren Niveau.

Der Zeichnung ist ebenfalls entnehmbar, dass die Motordrehzahl N in der Phase E des automatisch durchgeführten Schaltvorgangs bis zu demjenigen Zeitpunkt t₅ abfällt, in dem der Hochschaltvorgang vom vierten Gang G4 in dem sechsten Gang G6 im Getriebe mechanisch abgeschlossen ist. Ab diesem Zeitpunkt t₅ ist das Soll-Übersetzungsverhältnis wieder identisch mit dem Ist-Übersetzungsverhältnis, so dass die Leistungsanforderung F' an den Motor so weit angehoben werden kann, bis diese im Zeitpunkt t₆ mit der durch den Fahrer signalisierten Leitungsanforderung (Fahrpedalauslenkwinkel F) übereinstimmt.

Es gehört zum Wesen der Erfindung, dass die Änderung der Getriebeübersetzung gemäß dem hier vorgestellten Verfahren bei automatisierten Schaltgetrieben, bei stufig schaltbaren stufenlosen Umschlingungsgetrieben oder Toroidgetrieben oder in automatischen Planetengetrieben nutzbar ist.

Diese beispielhafte Darstellung eines Hochschaltvorganges macht deutlich, dass durch die Einführung einer Gangvorwahlphase der Fahrer im Zeitpunkt des eigentlichen Schaltvorgangs von einer Gangschalthebelbetätigung entlastet ist. Dadurch kann dieser einerseits den Vorzug genießen, ein Automatgetriebe manuell zu Übersetzungsänderungen zu veranlassen, er kann aber zudem auch den Vorteil auskosten, sich zum tatsächlichen Schaltzeitpunkt mit beiden Händen am Lenkrad voll auf das Verkehrsgeschehen konzentrieren zu können. Zur Auslösung des konkreten Schaltvorgangs muss dieser dann in der von Handschaltgetrieben bekannter Manier lediglich das Fahrpedal ein wenig entlasten, ohne dass dies die Leistungsabgabe im Schaltzeitpunkt merkbar reduziert.

### Bezugszeichen

- A: Fahrpedalauslenkwinkel
- B: Fahrpedalauslenkwinkel
- C: Fahrpedalauslenkwinkel
- D: Auslösungszeitraum für den Gangwechsel
- E: Phase der automatischen Gangschaltung
- F: Fahrpedalauslenkwinkel
- F': Leistungsanforderung; Scheinbarer Verlauf der Fahrpedalstellung während des Schaltvorgangs
- f₁: Erster Mindestwert der Fahrpedalrücknahme
- f₂: Zweiter Mindestwert der Fahrpedalrücknahme
- GN: Neutralstellung
- G2: Zweiter Gang
- G4: Vierter Gang
- G6: Sechster Gang
- G8: Achter Gang
- G10: Zehnter Gang
- N: Motordrehzahl
- t₁: Zeitpunkt
- t₂: Zeitpunkt
- t₃: Zeitpunkt
- t₄: Zeitpunkt
- t₅: Zeitpunkt
- t₆: Zeitpunkt
- V: Gangvorwahlphase

## Patentansprüche

1. Verfahren zur Steuerung des Schaltablaufs eines Automatgetriebes, bei dem der Wunsch zur Änderung der Getriebeübersetzung durch manuelle Betätigung einer Gangwählvorrichtung an ein Getriebesteuergerät signalisierbar ist, bei dem die Übersetzungsänderung von dem Getriebesteuergerät mit Hilfe von dort abgespeicherten Steuerungs- und Regelungsprogrammen durchgeführt wird, und bei dem die Betätigung von getriebeseitigen Stellglieder der Gangschaltvorrichtung durch hilfskraftbetätigbare Stellvorrichtungen erfolgt, die von dem Getriebesteuergerät gesteuerten werden, **dadurch gekennzeichnet, dass** eine Änderung der Getriebeübersetzung durch eine kurzzeitige Reduzierung des Fahrpedalauslenkwinkels (F) in Entlastungsrichtung ausgelöst wird.

2. Verfahren nach Anspruch 1, **dadurch gekennzeichnet, dass** bei einer Reduzierung des Fahrpedalauslenkwinkels (F) um einen ersten Mindestwert (f₁) die Stellvorrichtungen zur Vorbereitung der Übersetzungsänderung in eine Schaltbereitschaftsstellung gebracht werden.

3. Verfahren nach Anspruch 1 oder Anspruch 2, **dadurch gekennzeichnet, dass** bei einer Reduzierung des Fahrpedalauslenkwinkels (F) um einen zweiten Mindestwert (f₂) der automatische Ablauf der Übersetzungsänderung ausgelöst wird, dass dann die Motorleistungsvorgabe (F') zur Durchführung dieses Gangschaltvorgangs automatisch gesteuert sowie der durch die Fahrpedalauslenkung signalisierte Leistungswunsch des Fahrers während dieses Gangschaltvorgangs ignoriert wird.

4. Verfahren nach wenigstens einem der vorherigen Ansprüche, **dadurch gekennzeichnet, dass** die erste, die Bereitschaftsstellung der Stellvorrichtungen auslösende Stellwinkelreduzierung f₁ größer oder gleich 10°, und die zweite, die konkrete Änderung des Getriebeübersetzungsverhältnisses bewirkende Stellwinkelreduzierung f₂ größer oder gleich 20° ist.

5. Verfahren nach wenigstens einem der vorherigen Ansprüche, **dadurch gekennzeichnet, dass** der Wechsel der Getriebeübersetzung zugkraftunterbrechungsfrei abläuft.

6. Verfahren nach wenigstens einem der vorherigen Ansprüche, **dadurch gekennzeichnet, dass** die manuelle Vorwahl (Phase V) zur Übersetzungsänderung bei hoher Fahrzeugbeschleunigung und in einem niedrigen Gang erfolgt, während das Steuerungssignal zur Änderung des Übersetzungsverhältnisses durch Reduzierung des Fahrpedalauslenkwinkels (Phase D) bei Erreichen einer von dem Fahrer bestimmbaren Motordrehzahl, einer Motordrehzahl- / Motorgeräuschzuordnung oder bei Erreichen einer von dem Fahrer bestimmbaren Fahrgeschwindigkeit durch Fahrpedalrücknahme ausgelöst wird.

7. Verfahren nach wenigstens einem der vorherigen Ansprüche, **dadurch gekennzeichnet, dass** die Änderung der Getriebeübersetzung nur dann durchgeführt wird, wenn zwischen der Vorwahl der Übersetzungsänderung (Phase V) und der Reduzierung der Fahrpedalauslenkung (Phase D) ein vorgegebener Höchstzeitraum nicht überschritten wird.

8. Verfahren nach Anspruch 7, **dadurch gekennzeichnet, dass** der Höchstzeitraum 60 Sekunden, vorzugsweise 30 Sekunden und besonders bevorzugt 15 Sekunden beträgt.

9. Verfahren nach wenigstens einem der vorherigen Ansprüche, **dadurch gekennzeichnet, dass** eine Übersetzungsänderung nur dann durchgeführt wird, wenn neben der genannten Betätigung des Getriebewählhebels und dem Erreichen oder Überschreiten des zweiten Fahrpedalrücknahmewertes (f₂) zusätzlich eine Fahrpedalbetätigungsgeschwindigkeit gemessen wird, die einen vorbestimmten Wert überschreitet.

10. Verfahren nach wenigstens einem der vorherigen Ansprüche, **dadurch gekennzeichnet, dass** der Wechsel der Getriebeübersetzung in einem automatisierten Schaltgetriebe, einem stufenlosen Automatikgetriebe oder an einem automatischen Stufenplanetengetriebe durchgeführt wird.
